Europäisches Patentamt

**European Patent Office**

Office européen des brevets

(19)

(11) Veröffentlichungsnummer: **0 090 328**
**B1**

(12) **EUROPÄISCHE PATENTSCHRIFT**

(45) Veröffentlichungstag der Patentschrift:
**24.07.85**

(21) Anmeldenummer: **83102829.5**

(22) Anmeldetag: **22.03.83**

(51) Int. Cl.⁴: **C 08 F 10/02,** C 08 F 2/42,
C 08 F 4/60

(54) Kontinuierliches Verfahren zur Polymerisation und Copolymerisation von Ethylen.

(30) Priorität: **27.03.82 DE 3211457**

(43) Veröffentlichungstag der Anmeldung:
**05.10.83 Patentblatt 83/40**

(45) Bekanntmachung des Hinweises auf die Patenterteilung:
**24.07.85 Patentblatt 85/30**

(84) Benannte Vertragsstaaten:
**AT BE DE FR GB IT LU NL**

(56) Entgegenhaltungen:
**DE - A - 2 607 601**

(73) Patentinhaber: **Ruhrchemie Aktiengesellschaft,
Bruchstrasse 219, D-4200 Oberhausen 13 (DE)**

(72) Erfinder: **Payer, Wolfgang, Dr. Dipl.-Chem.,
Zedernweg 58, D-4230 Wesel 1 (DE)**

(74) Vertreter: **Reichelt, Karl-Heinz, Dr., m. Br. Ruhrchemie
Aktiengesellschaft Abt. PLD Postfach 13 01 60,
D-4200 Oberhausen 13 (DE)**

## Beschreibung

Die vorliegende Erfindung betrifft ein kontinuierliches Verfahren zur Polymerisation und Copolymerisation von Ethylen in rohrförmigen Reaktoren. Zum Abbruch der Reaktion durch Desaktivierung des Katalysators wird dem Reaktionsgemisch ein Alkali- und/oder Erdalkali- und/oder Zinksalz einer Carbonsäure zugesetzt.

Zur Polymerisation und Copolymerisation von Ethylen sind verschiedene Verfahren bekannt, die sich durch die eingesetzten Katalysatoren bzw. Initiatoren und die Reaktionsbedingungen unterscheiden. Nach einem Prozess setzt man als Katalysatoren Gemische aus Übergangsmetallverbindungen und aluminiumorganischen Verbindungen (Ziegler-Katalysatoren) ein und arbeitet bei relativ niedrigen Drücken und Temperaturen. Das Verfahren führt zu im wesentlichen linear gebauten Makromolekülen.

Nach einer anderen Arbeitsweise polymerisiert man in Gegenwart von radikalbildenden Initiatoren bei hohen Drücken und hohen Temperaturen, wobei stark verzweigte Makromoleküle gebildet werden.

Die vorstehend durch ihre Hauptmerkmale beschriebenen Prozesse haben Vor- und Nachteile und es hat nicht an Versuchen gefehlt, die Vorteile der beiden Verfahren in einem neuen Prozess zu vereinen. Auf diesem Wege wurden Verfahren entwickelt, bei denen die Polymerisation in Gegenwart von Ziegler-Katalysatoren bei hohen Drücken und Temperaturen erfolgt. Die Verwendung von Ziegler-Katalysatoren bei der Hochdruckpolymerisation und -copolymerisation von Ethylen bedingt aber Änderungen der Reaktionsführung gegenüber der Polymerisation mit radikalbildenden Initiatoren. Während nämlich im Verlauf der Polymerisation die radikalbildenden Initiatoren verbraucht werden, bleiben die Ziegler-Katalysatoren unverändert aktiv im Reaktionsgemisch zurück. Daher können in den dem Reaktor nachgeschalteten Abscheidevorrichtungen (Separatoren), in denen die Trennung von Polymerisat und nicht umgesetzten Monomeren erfolgt, weitere unerwünschte Polymerisationsreaktionen ablaufen.

Aus der DE-OS Nr. 2607601 ist es bekannt, die Nachrekation der Monomeren in der Abscheidevorrichtung dadurch zu unterdrücken, dass man dem Reaktionsgemisch am Ende des Reaktors wenigstens ein Alkali- und/oder Erdalkalisalz einer Carbonsäure in einer zur Desaktivierung des Katalysators ausreichenden Menge zusetzt. Hierbei ist das Salz so auszuwählen, dass die Reaktionsprodukte mit dem Katalysatorbestandteil im Polymeren verbleiben.

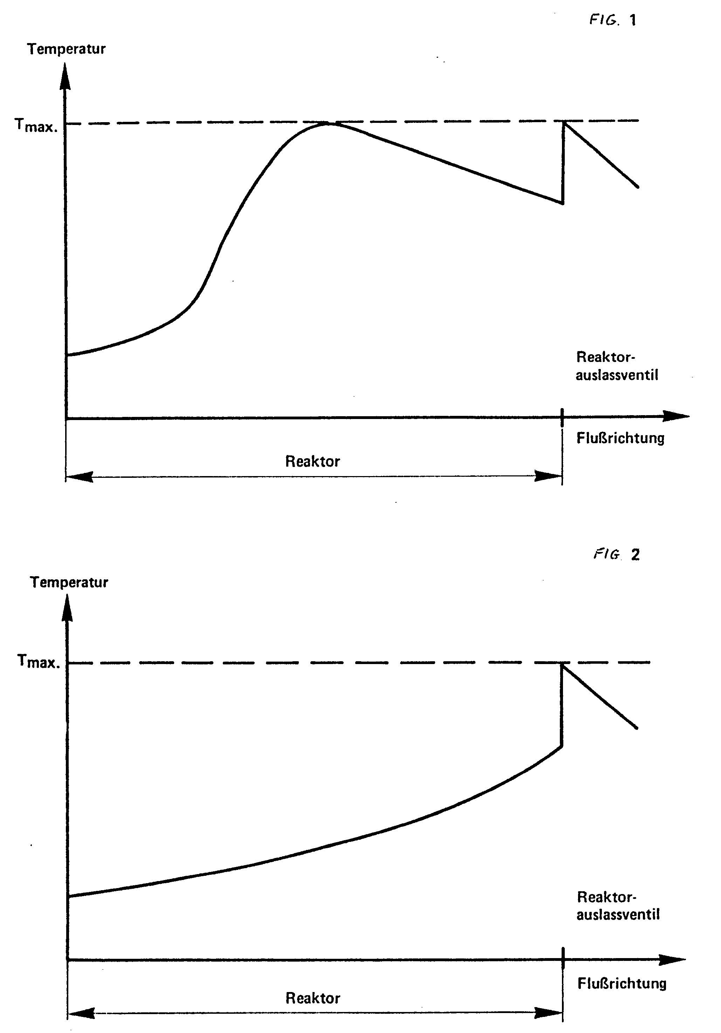

Eine derartige Arbeitsweise ist beschränkt auf die Hochdruckpolymerisation und -copolymerisation von Ethylen in Rührautoklaven. Sie ist nicht geeignet für eine andere Variante der Hochdruckpolymerisation, die in Rohrreaktoren durchgeführt wird. Der Unterschied zwischen diesen beiden Verfahrensvarianten besteht unter anderem darin, dass sich im Autoklaven eine nahezu konstante Temperatur einstellt, der Rohrreaktor jedoch ein Temperaturprofil über die Länge des Reaktors aufweist. Der Verlauf derartiger Temperaturprofile ist in den Abbildungen 1 und 2 dargestellt. Bei Verwendung radikalbildender Initiatoren steigt die Temperatur zunächst bis zu einem Maximum an und fällt dann nach Verbrauch des eingesetzten Initiators wieder ab. Bei der Entspannung des Reaktionsgemisches tritt erneut eine Temperaturerhöhung auf. Diese ist zurückzuführen auf den für Ethylen charakteristischen negativen Joule-Thomson-Effekt. Die Temperatur des Reaktionsgemisches vor dem Entspannungsventil muss auf einen solchen Wert eingestellt werden, dass durch die Temperatursteigerung nach der Entspannung keine explosionsartige Zersetzung des Ethylens stattfindet. Dabei ist aber zu berücksichtigen, dass im Reaktor eine möglichst hohe Temperatur erreicht wird, da mit steigender Reaktionstemperatur der bei der Polymerisationsreaktion erzielbare Umsatz ansteigt und die Wirtschaftlichkeit des Verfahrens verbessert wird. Daher sind der Arbeitsweise nach der DE-OS Nr. 2607601 bei Rohrreaktoren Grenzen gesetzt, denn die höchste Temperatur bei diesem Verfahren liegt am Reaktorauslass. Eine wirtschaftlich günstige Reaktionsführung ist daher nicht zu erzielen.

Es bestand daher die Aufgabe, ein Verfahren zu entwickeln, das die aufgezeigten Nachteile vermeidet und die Durchführung der Polymerisation und Copolymerisation von Ethylen unter hohem Druck in Rohrreaktoren mit Ziegler-Katalysatoren bei hoher Wirtschaftlichkeit erlaubt.

Die Erfindung besteht in einem kontinuierlichen Verfahren zur Polymerisation und Copolymerisation von Ethylen bei Drücken oberhalb 500 bar und Temperaturen oberhalb 160° C in Gegenwart eines eine Übergangsmetallverbindung und eine organische Aluminiumverbindung enthaltenden Katalysators, wobei zur Beendigung der Reaktion dem Reaktionsgemisch wenigstens ein Salz einer Carbonsäure entweder im reinen geschmolzenen Zustand oder in Suspension oder in Lösung in einem Kohlenwasserstoff zugesetzt wird und die Reaktionsprodukte des Carbonsäuresalzes mit den Bestandteilen des Katalysators im Polymeren verbleiben. Es ist dadurch gekennzeichnet, dass die Polymerisation in einem rohrförmigen Reaktor durchgeführt wird und wenigstens ein Alkali- und/oder Erdalkali- und/oder Zinksalz an einer Stelle eingespeist wird, die 1/6 bis 1/2 der Reaktorlänge von dem Auslassventil in Fliessrichtung liegt.

Das neue Verfahren gestattet es, die Polymerisation und Copolymerisation von Ethylen mit Ziegler-Katalysatoren unter hohem Druck in einem Rohrreaktor durchzuführen. Die Vorteile des Rohrreaktor-Verfahrens gegenüber dem Autoklaven-Verfahren bleiben dabei erhalten.

Entsprechend der Erfindung wird die Polymerisation in rohrförmigen Reaktoren durchgeführt. Solche Reaktoren haben im allgemeinen eine Länge von etwa 400 bis 4000 m, zweckmässigerweise liegt die untere Grenze bei 800 und die obere Grenze bei etwa 3000 m, insbesondere bei etwa 2000 m. Das Verhältnis von Länge zu Durchmesser liegt im Bereich von etwa 10 000:1 bis 100 000:1. Als untere Grenze für dieses Verhältnis hat sich ein Wert von 20 000:1 und insbesondere von 25 000:1 bewährt. Die obere Grenze liegt zweckmässig bei etwa 80 000:1, vorzugsweise bei 60 000:1.

Der Druck bei der Polymerisation liegt oberhalb 500 bar. Vorzugsweise stellt man einen Druck von etwa 1200 und insbesondere etwa 1500 bar ein. Die obere Grenze liegt zweckmässig bei etwa 3000, vorzugsweise bei etwa 2800 und insbesondere bei etwa 2700 bar.

Die Reaktionstemperatur liegt oberhalb 160° C. Zweckmässig soll sie 190, vorzugsweise 200° C nicht unterschreiten. Die obere Grenze ist durch die Zersetzungstemperatur des Ethylens gegeben. Diese liegt im allgemeinen bei etwa 300° C, kann aber auch deutlich höher sein. Die Regelung der Temperatur im Reaktor erfolgt in an sich bekannter Weise durch teilweise Kühlung des Rohrreaktors und insbesondere durch Einspeisen von Kaltgas, dessen Temperatur zwischen etwa 0 und 60° C liegt. Dieses Kaltgas, darunter versteht man die Monomeren, die ggf. noch Katalysatoren enthalten, wird an einer oder mehreren Stellen längs des rohrförmigen Reaktors eingespeist. Die Menge des eingespeisten Kaltgases wird so gewählt, dass die vorstehend beschriebenen Temperaturen eingestellt werden.

Als Katalysatoren werden nach dem erfindungsgemässen Verfahren die sogenannten Ziegler-Katalysatoren verwendet. Hierunter versteht man Gemische aus einer Übergangsmetallverbindung und einer organischen Aluminiumverbindung. Als Übergangsmetallverbindungen kommen insbesondere Verbindungen des Titans in Betracht, vorzugsweise Titantrichlorid. Geeignet sind aber auch Katalysatoren, die durch Umsetzung von Ti-Verbindungen mit Mg-Verbindungen wie Magnesiumoxid, Magnesiumhydroxychloride, Magnesiumchlorid, Magnesiumalkoholat, Alkylmagnesiumhalogenide und Dialkylmagnesiumverbindungen erhalten werden. Die organische Aluminiumverbindung ist im allgemeinen eine Alkylaluminiumverbindung, vorzugsweise ein Trialkylaluminium, ein Dialkylaluminiummonohalogenid oder ein Alkylaluminiumdihalogenid oder Gemische, die mindestens zwei der vorstehenden Verbindungen enthalten. Das Verhältnis der Katalysatorbestandteile entspricht einem Atomverhältnis von Aluminium zu Titan zwischen etwa 1 und 10.

Das erfindungsgemässe Verfahren ist nicht auf die Polymerisation von Ethylen beschränkt, sondern schliesst auch die Copolymerisation von Ethylen mit anderen Monomeren, die in Gegenwart der Ziegler-Katalysatoren mit Ethylen polymerisierbar sind, ein. Solche Comonomeren sind z. B. α-Olefine wie Propylen, Buten-1, Penten-1, Hexen-1, 4-Methylpenten-1, Octen-1. Den Monomeren bzw. Monomerengemischen können in an sich bekannter Weise sogenannte Molekulargewichtsregler zugesetzt werden, z. B. Wasserstoff, der in Mengen bis 10 Vol.-% Anwendung findet. Daneben können Kohlenwasserstoffe wie Propan als Verdünnungsmittel zugegeben werden.

Zur Verhinderung unerwünschter Reaktionen in den nachgeschalteten Abscheidevorrichtungen des rohrförmigen Reaktors werden zur Beendigung der Reaktion dem Reaktionsgemisch Alkalimetallsalze und/oder Erdalkalisalze und/oder Zinksalze von Carbonsäuren zugesetzt. Es genügt, dem Reaktionsgemisch ein einzelnes Salz zuzugeben, jedoch kann man auch Salzgemische verwenden. Unter Gemischen werden dabei Gemische aus Salzen gleicher Metalle und verschiedener Säuren ebenso verstanden wie Gemische aus verschiedenen Metallen und gleichen Säuren. Als Alkalimetalle und Erdalkalimetalle kommen insbesondere Natrium, Kalium und Kalzium in Betracht. Besonders bewährt hat sich die Verwendung von Zinksalzen, die die Farbe der Polymerisate günstig beeinflussen.

Die Salze leiten sich von gesättigten Fettsäuren und/oder von aromatischen Säuren ab. Beispiele für derartige Säuren sind Laurinsäure, Myristinsäure, Palmitinsäure, Stearinsäure, Benzoesäure, Naphthensäuren.

Aufgabe der dem Reaktionsgemisch zugesetzten Salze organischer Säuren ist es, durch Reaktion mit den Katalysatorbestandteilen den Katalysator zu desaktivieren. Die Salze sind so auszuwählen, dass die Reaktionsprodukte zwischen Salz und Katalysator nicht mit den im Kreislauf geführten Monomeren aus dem Reaktor ausgetragen werden, sondern im Polymerisat zurückbleiben.

Die Menge der zugesetzten Salze richtet sich nach dem Anteil des Katalysators im Reaktionsgemisch. Sie muss auf jeden Fall ausreichen, um die Desaktivierung des Katalysators sicherzustellen. Diese Desaktivierung wird durch Zerstörung wenigstens eines der Bestandteile des Katalysators, also entweder der Übergangsmetallverbindung oder der organischen Aluminiumverbindung bewirkt. Es hat sich bewährt, so viel Metallsalz zuzugeben, dass beide Bestandteile des Katalysators umgesetzt werden. Vorzugsweise beträgt das Verhältnis von Milligrammäquivalent des Metalls in dem Salz zu Milligrammatom Aluminium und Titan im Katalysator zwischen 0,2 und 10.

Ein wesentliches Merkmal der Erfindung ist, dass die Einspeisung des Salzes an einer Stelle, die 1/5 bis 1/2 der Reaktorlänge von dem Auslassventil in Fliessrichtung liegt, erfolgt.

Auf diese Weise wird erreicht, dass die Reaktion bei Temperaturen abläuft, die einen hohen Umsatz gewährleisten, und dass darüber hinaus das Gas nach der Entspannung eine Temperatur aufweist, die eine gefahrlose Handhabung ermöglicht.

## Patentansprüche

1. Kontinuierliches Verfahren zur Polymerisation und Copolymerisation von Ethylen bei Drükken oberhalb 500 bar und Temperaturen oberhalb 160° C in Gegenwart eines eine Übergangsmetallverbindung und eine organische Aluminiumverbindung enthaltenden Katalysators, wobei zur Beendigung der Reaktion dem Reaktionsgemisch wenigstens ein Salz einer Carbonsäure entweder im reinen geschmolzenen Zustand oder in Suspension oder in Lösung in einem Kohlenwasserstoff zugesetzt wird und die Reaktionsprodukte des Carbonsäuresalzes mit den Bestandteilen des Katalysators im Polymeren verbleiben, dadurch gekennzeichnet, dass die Polymerisation in einem rohrförmigen Reaktor durchgeführt wird und wenigstens ein Alkali- und/oder Erdalkali- und/oder Zinksalz an einer Stelle eingespeist wird, die ⅕ bis ½ der Reaktorlänge von dem Auslassventil in Fliessrichtung liegt.

2. Verfahren nach Anspruch 1, dadurch gekennzeichnet, dass sich die Salze von Stearinsäure oder Naphtensäure ableiten.

3. Verfahren nach Anspruch 1 und 2, dadurch gekennzeichnet, dass je Milligrammatom Aluminium und Titan im Katalysator zwischen 0,2 und 10 mg äquivalent des als Salz vorliegenden Metalls eingesetzt werden.

## Claims

1. Continuous process for polymerising and copolymerising ethylene at pressures above 500 bar and temperatures above 160° C in the presence of a catalyst containing a transition metal compound and an organic aluminium compound, wherein in order to terminate the reaction at least one salt of a carboxylic acid is added either in the pure molten state or in suspension or in solution in a hydrocarbon to the reaction mixture and the reaction products of the carboxylic and salt remain with the constituents of the catalyst in the polymer, characterised in that the polymerisation is carried out in a tubular reactor and at least one alkali metal salt and/or alkaline earth metal salt and/or zinc salt is added at a point which is ⅕ to ½ of the reactor length from the outlet valve in the flow direction.

2. Process according to Claim 1, characterised in that the salts are derived from stearic acid or naphthenic acid.

3. Process according to Claims 1 and 2, characterised in that between 0.2 and 10 mg equivalent of the metal present as salt is used per milligram atom of aluminium and titanium in the catalyst.

## Revendications

1. Procédé continu pour la polymérisation et la copolymérisation de l'éthylène sous des pressions de plus de 500 bar et à des températures de plus de 160° C en présence d'un catalyseur contenant un composé de métal de transition et un composé organique d'aluminium, dans lequel on ajoute au mélange de réaction pour terminer la réaction au moins un sel d'un acide carboxylique, soit à l'état fondu pur, soit en suspension ou en solution dans un hydrocarbure, et les produits de réaction du sel d'acide carboxylique avec les constituants du catalyseur restent dans le polymère, caractérisé en ce que la polymérisation est mise en œuvre dans un réacteur tubulaire et l'on introduit au moins un sel de métal alcalin et/ou un sel de métal alcalino-terreux et/ou un sel de zinc en un point situé à une distance de la soupape de sortie de ⅕ à ½ de la longueur du réacteur, dans la direction d'écoulement.

2. Procédé selon la revendication 1, caractérisé en ce que les sels sont dérivés de l'acide stéarique ou de l'acide naphténique.

3. Procédé selon l'une des revendications 1 ou 2, caractérisé en ce que l'on utilise entre 0,2 et 10 milliéquivalents-grammes du métal présent sous forme de sel par milliatome-gramme d'aluminium et de titane dans le catalyseur.

FIG. 1

Temperatur

$T_{max.}$

Reaktorauslassventil

Flußrichtung

Reaktor

FIG. 2

Temperatur

$T_{max.}$

Reaktorauslassventil

Flußrichtung

Reaktor

5